# EUROPÄISCHE PATENTSCHRIFT

(11) **EP 4 426 925 B1**
(45) Veröffentlichungstag und Bekanntmachung des Hinweises auf die Patenterteilung: **10.09.2025**
(21) Anmeldenummer: 22757937.2
(22) Anmeldetag: 27.07.2022
(51) Int. Cl.: F02M 21/02

(54) **GASINJEKTOR MIT HYDRAULISCHER DÄMPFUNGSEINRICHTUNG MIT FREIWEG**
GAS INJECTOR WITH HYDRAULIC DAMPING DEVICE WITH FREE STROKE
INJECTEUR DE GAZ AVEC DISPOSITIF D'AMORTISSEMENT HYDRAULIQUE AVEC COURSE LIBRE

(30) Priorität: 04.11.2021 DE 102021212419; 13.12.2021 DE 102021214187
(43) Veröffentlichungstag der Anmeldung: 11.09.2024
(73) Patentinhaber: Robert Bosch GmbH, 70442 Stuttgart (DE)
(72) Erfinder: SCHMIEDER, Dietmar, 71706 Markgroeningen (DE); STIER, Hubert, 71665 Vaihingen/Enz (DE)
(86) Internationale Anmeldenummer: PCT/EP2022/071081
(87) Internationale Veröffentlichungsnummer: WO 2023/078592

(56) Entgegenhaltungen:
- DE-A1- 102008 041 544
- DE-A1- 102015 215 537
- DE-A1- 102016 205 358
- DE-A1- 102018 201 951

## Beschreibung

### Stand der Technik

Die vorliegende Erfindung betrifft einen Gasinjektor zum Einblasen eines gasförmigen Mediums, insbesondere Wasserstoff oder Erdgas oder dergleichen mit einer hydraulischen Dämpfungseinrichtung mit Freiweg, um eine Bewegung einer Ventilnadel, insbesondere sowohl bei einem Öffnungsvorgang als auch bei einem Schließvorgang, zu dämpfen.

Gasinjektoren sind aus dem Stand der Technik in unterschiedlichen Ausgestaltungen bekannt. Zum Beispiel offenbart die DE 102016205358 A1 einen Gasinjektor mit einer hydraulischen Dämpfungseinrichtung.

Aufgrund des gasförmigen Mediums, welches Gasinjektoren einblasen, müssen Gasinjektoren im Vergleich mit Injektoren für flüssige Medien, beispielsweise Kraftstoffinjektoren, einen sehr großen Hub ausführen. Dies kann bei Gasinjektoren jedoch zu einem großen Verschleiß an Bauteilen, insbesondere an einem Dichtsitz und einer Hubbegrenzung auftreten. Durch die notwendigen großen Schaltkräfte bei Gasinjektoren wird der Verschleiß im Betrieb an den Bauteilen noch verstärkt.

### Offenbarung der Erfindung

Der erfindungsgemäße Gasinjektor zum Einblasen eines gasförmigen Mediums, insbesondere zum Einblasen von Wasserstoff oder Erdgas, mit den Merkmalen des Anspruchs 1 weist demgegenüber den Vorteil auf, dass trotz des großen Hubes aufgrund des großen einzublasenden Gasvolumens eine Dämpfungseinrichtung sehr kleinbauend und kostengünstig bereitgestellt werden kann. Die Dämpfungseinrichtung reduziert auch einen Verschleiß von Bauteilen des Gasinjektors. Weiterhin weist der erfindungsgemäße Gasinjektor ein deutlich verbessertes Geräuschverhalten auf, insbesondere bei Auftreffen auf einen Endanschlag bei einem Öffnungsvorgang und beim Schließen eines Dichtsitzes bei einem Schließvorgang. Dies wird erfindungsgemäß dadurch erreicht, dass der Gasinjektor ein Schließelement aufweist, welches eine Durchgangsöffnung an einem Dichtsitz freigibt und verschließt. Ferner umfasst der Gasinjektor ein Rückstellelement, welches das Schließelement aus dem geöffneten Zustand in einen geschlossenen Ausgangszustand zurückstellt. Ferner ist ein Aktor vorgesehen, welcher das Schließelement betätigt sowie eine hydraulische Dämpfungseinrichtung. Die hydraulische Dämpfungseinrichtung ist zur Dämpfung einer Bewegung des Schließelements eingerichtet. Die Dämpfung erfolgt dabei mittels einer Flüssigkeit, welche in einem abgeschlossenen Hydraulikraum der Dämpfungseinrichtung einen Dämpfungsvorgang beim Öffnen und/oder Schließen des Schließelements durchführt. Ferner ist eine Freiweg-Anordnung vorgesehen, welche funktional zwischen dem Schließelement und der hydraulischen Dämpfungseinrichtung angeordnet ist. Die Freiweg-Anordnung ist eingerichtet, die Dämpfung der Bewegung des Schließelements sowohl beim Öffnungsvorgang als auch beim Schließvorgang erst nach Zurücklegen eines vorbestimmten Freiweges auszuführen. Dies ermöglicht einen sehr kostengünstig und kleinbauenden Aufbau der Dämpfungseinrichtung. Durch den Freiweg der Freiweg-Anordnung erfolgt somit ein Öffnungsvorgang und Schließvorgang zuerst ohne Dämpfung und erst nach Zurücklegen des Freiwegs greift die Dämpfungseinrichtung ein. Somit kann ein übermäßiger Verschleiß an den Kontaktbauteilen des Gasinjektors, insbesondere am Dichtsitz und/oder an einem Anschlag, welcher einen Öffnungshub des Gasinjektors begrenzt, vermieden werden. Weiterhin ergibt sich durch die hydraulische Dämpfung mittels der Dämpfungseinrichtung ein deutlich verbessertes Geräuschverhalten beim Öffnungs- und Schließvorgang des Gasinjektors.

Die Unteransprüche zeigen bevorzugte Weiterbildungen der Erfindung.

Weiter bevorzugt umfasst ein vollständiger Öffnungshub des Schließelements den Freiweg der Freiweg-Anordnung und einen Dämpfungsweg der hydraulischen Dämpfungseinrichtung. Der Dämpfungsweg der hydraulischen Dämpfungseinrichtung ist dabei kleiner als der Freiweg. Somit wird beispielsweise beim Öffnungsvorgang ein sehr schnelles Öffnen mit entsprechend großen Einblasmengen erreicht, bevor durch die Dämpfungseinrichtung eine Dämpfung der Öffnungsbewegung nach Zurücklegen des Freiwegs eintritt, was den Öffnungsvorgang etwas verlangsamt. In gleicher Weise ist bei einer Schließbewegung des Schließelements zuerst durch Zurücklegen des Freiwegs ein Großteil des Schließweges des Schließelements zurückgelegt, bis dann die hydraulische Dämpfungseinrichtung eingreift und eine Dämpfung zur Verschleißvermeidung und Geräuschvermeidung beim Auftreffen des Schließelements auf den Dichtsitz ermöglicht.

Ein Verhältnis des Dämpfungswegs zum Freiweg liegt vorzugsweise in einem Bereich von 0,06 bis 0,12, insbesondere in einem Bereich von 0,08 bis 0,10 und beträgt besonders bevorzugt 0,9.

Weiter bevorzugt umfasst die Freiweg-Anordnung ein Freiweg-Gehäuse, ein im Freiweg-Gehäuse angeordnetes Steuerelement und ein am Freiweg-Gehäuse fixiertes Anschlagelement, insbesondere einen Anschlagring. Dabei ist der Freiweg zwischen dem Steuerelement und dem Anschlagelement ausgebildet oder alternativ zwischen dem Steuerelement und dem Freiweg-Gehäuse ausgebildet. Dadurch kann die Freiweg-Anordnung sehr kompakt und kleinbauend ausgebildet werden.

Weiter bevorzugt ist das Freiweg-Gehäuse mit der hydraulischen Dämpfungseinrichtung verbunden und das Steuerelement mit dem Schließelement verbunden. Alternativ ist das Freiweg-Gehäuse mit dem Schließelement verbunden und das Steuerelement ist mit der hydraulischen Dämpfungseinrichtung verbunden. Somit ist die Freiweg-Anordnung zwischen das Schließelement und die hydraulische Dämpfungseinrichtung in Axialrichtung des Gasinjektors integriert.

Weiter bevorzugt umfasst die hydraulische Dämpfungseinrichtung einen Grundkörper und einen im Grundkörper axial beweglich angeordneten Zentrierbolzen, welcher mit der Freiweg-Anordnung verbunden ist. Dadurch kann auf einfache Weise eine Verbindung zwischen der hydraulischen Dämpfungseinrichtung und der Freiweg-Anordnung über den Zentrierbolzen erreicht werden. Der Zentrierbolzen reicht vorzugsweise in die hydraulische Dämpfungseinrichtung hinein.

Für einen möglichst einfachen Aufbau weist die hydraulische Dämpfungseinrichtung einen ersten Steuerraum und einen zweiten Steuerraum auf, welche über eine Fluidverbindung miteinander verbunden sind. Dadurch sind zwei Steuerräume vorgesehen, wobei ein Steuerraum für die Dämpfung der Öffnungsbewegung des Schließelements und der andere Steuerraum für die Dämpfung der Schließbewegung des Schließelements verantwortlich ist.

Die Fluidverbindung zwischen dem ersten und zweiten Steuerraum umfasst vorzugsweise eine Drossel. Die Drossel ist vorzugsweise in einem Steuerzylinder, welcher den ersten vom zweiten Steuerraum trennt, angeordnet. Über die Drossel erfolgt eine Dämpfung des Schließelements beim Öffnungsvorgang und beim Schließvorgang durch Volumenänderung im ersten und zweiten Steuerraum. Die Drossel kann beispielsweise als kleine Bohrung im Steuerzylinder ausgebildet sein oder alternativ oder zusätzlich über Radialspalte am Steuerzylinder bereitgestellt werden.

Weiter bevorzugt sind der erste und zweite Steuerraum im Grundkörper ausgebildet, insbesondere in einer einseitig offenen Bohrung oder dergleichen, welche in einer Mittelachse des Gasinjektors liegt.

Um einen möglichst kompakten Aufbau zu erreichen, weist die Dämpfungseinrichtung vorzugsweise einen Grundkörper, ein erstes flexibles Element und ein zweites flexibles Element auf. Dabei steht das Schließelement mit dem ersten flexiblen Element in Verbindung und das erste und zweite flexible Element bilden Gehäusebereiche des abgeschlossenen Hydraulikraums. Das erste flexible Element ermöglicht somit die Bewegung des Schließelements.

Das erste und zweite flexible Element ist vorzugsweise eine Metallmembran. Alternativ sind das erste und zweite flexible Element metallische Faltenbalge.

Weiter bevorzugt ist das erste flexible Element derart am Grundkörper der Dämpfungseinrichtung angeordnet, dass zwischen dem Grundkörper und dem ersten flexiblen Element ein erster Unterraum des Hydraulikraums ausgebildet ist. Ferner ist das zweite flexible Element derart am Grundkörper angeordnet, dass zwischen dem Grundkörper und dem zweiten flexiblen Element ein zweiter Unterraum des Hydraulikraums ausgebildet ist. Der erste und zweite Unterraum ist dabei über einen Verbindungsbereich, vorzugsweise eine Nut oder eine Bohrung oder dergleichen, miteinander in Fluidverbindung.

Weiter bevorzugt sind der erste und zweite Steuerraum mittels einer Querbohrung mit dem Verbindungsbereich verbunden.

Um möglichst einen geringen Temperatureinfluss im Betrieb auf die Dämpfungseinrichtung zu haben, ist die Dämpfungseinrichtung und die Freiweg-Anordnung vorzugsweise in Axialrichtung X-X des Gasinjektors an einer vom Dichtsitz abgewandten Seite des Aktors angeordnet. Somit schützt der Aktor die Dämpfungseinrichtung und die Freiweg-Anordnung vor möglichen thermischen Einflüssen, insbesondere wenn der Gasinjektor zur Direkteinblasung in einen Brennraum einer Brennkraftmaschine eingerichtet ist.

Der Gasinjektor ist weiter bevorzugt ein nach außen öffnender Gasinjektor. Der Gasinjektor ist vorzugsweise zur Direkteinblasung eines gasförmigen Brennstoffs in einen Brennraum einer Brennkraftmaschine ausgebildet.

Um eine möglichst kompakte, vormontierbare Einheit bereitzustellen, ist die hydraulische Dämpfungseinrichtung vorzugsweise mit der Freiweg-Anordnung als vormontierbares Modul ausgebildet. Das vormontierbare Modul ist vorzugsweise in einem Stellmodulgehäuse, durch welches das Schließelement hindurchgeführt ist, angeordnet.

Um eine große Leckage aus dem ersten und zweiten Steuerraum in den Hydraulikraum zu vermeiden, ist der Zentrierbolzen vorzugsweise mittels des ersten flexiblen Elements, insbesondere einer Metallmembran, und einer Dichtscheibe geführt. Die Dichtscheibe ist dabei mittels einer Federscheibe in Axialrichtung vorgespannt. Durch diese Maßnahme können die Radialspalte in der Dämpfungseinrichtung sehr klein ausgestaltet werden, so dass die Leckage über diese Radialspalte minimiert werden kann.

Die Federscheibe ist vorzugsweise topfförmig ausgebildet und umfasst einen Halterand, in Axialrichtung vorstehende Nocken und axiale Durchbrüche. Die Federscheibe ist vorzugsweise im zweiten Steuerraum der hydraulischen Dämpfungseinrichtung angeordnet. Vorzugsweise übt die Federscheibe eine Axialkraft auf die Dichtscheibe aus, wodurch die Dichtscheibe am Grundkörper der hydraulischen Dämpfungseinrichtung abdichtet.

Alternativ bevorzugt ist die voranstehend beschriebene Dichtscheibe mittels einer eingepressten Scheibe gegen den Grundkörper der hydraulischen Dämpfungseinrichtung gedrückt. Dadurch kann eine sehr gute Abdichtung, insbesondere am Kontaktbereich zwischen der Dichtscheibe und dem Grundkörper erreicht werden. Die Dichtscheibe führt dabei zusammen mit dem ersten flexiblen Element, insbesondere einer Metallmembran, den Zentrierbolzen. Vorzugsweise ist am inneren Umfang der Dichtscheibe ein Radius ausgebildet. Dadurch können Radialspalte sehr klein ausgestaltet werden, so dass eine Leckage über diese Radialspalte vom Hydraulikraum in den ersten und zweiten Steuerraum minimiert werden kann. Die eingepresste Scheibe ist dabei durch eine Pressverbindung mit dem Grundkörper verbunden.

Vorzugsweise ist am radial äußeren Umfang der Dichtscheibe ein mit Flüssigkeit gefüllter Ausgleichsraum vorhanden.

Ferner betrifft die vorliegende Erfindung eine Brennkraftmaschine mit einem erfindungsgemäßen Gasinjektor. Der Gasinjektor bläst dabei vorzugsweise Wasserstoff oder Erdgas oder ein anderes Brenngas, insbesondere direkt in einen Brennraum der Brennkraftmaschine, ein.

### Kurze Beschreibung der Zeichnungen

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines Gasinjektors gemäß einem ersten bevorzugten Ausführungsbeispiel der Erfindung,
- Figur 2: eine schematische, vergrößerte Teilschnittansicht einer Dämpfungseinrichtung und einer Freiweg-Anordnung des Gasinjektors von Figur 1 im geschlossenen Zustand des Gasinjektors,
- Figur 3: eine schematische, vergrößerte Teilschnittansicht einer Dämpfungseinrichtung und einer Freiweg-Anordnung des Gasinjektors von Figur 1 im teilweise geöffneten Zustand nach Zurücklegen des Freiwegs,
- Figur 4: eine schematische, vergrößerte Teilschnittansicht einer Dämpfungseinrichtung und einer Freiweg-Anordnung des Gasinjektors von Figur 1 im vollständig geöffneten Zustand nach Zurücklegen des Freiwegs,
- Figur 5: eine schematische, vergrößerte Teilschnittansicht einer Dämpfungseinrichtung und einer Freiweg-Anordnung des Gasinjektors von Figur 1 im teilweise geschlossenen Zustand nach Zurücklegen des Freiwegs,
- Figur 6: eine schematische Teil-Schnittansicht einer Dämpfungseinrichtung und einer Freiweg-Anordnung eines Gasinjektors gemäß einem zweiten Ausführungsbeispiel der Erfindung im geschlossenen Zustand,
- Figur 7: eine schematische Teil-Schnittansicht einer Dämpfungseinrichtung und einer Freiweg-Anordnung eines Gasinjektors gemäß einem dritten Ausführungsbeispiel der Erfindung im geschlossenen Zustand,
- Figur 8: eine schematische Teil-Schnittansicht einer Dämpfungseinrichtung und einer Freiweg-Anordnung eines Gasinjektors gemäß einem vierten Ausführungsbeispiel der Erfindung im geschlossenen Zustand,
- Figur 9: eine schematische Schnittansicht der Federscheibe von Figur 8,
- Figur 10: eine schematische Draufsicht der Federscheibe von Figur 9, und
- Figur 11: eine schematische Teil-Schnittansicht einer Dämpfungseinrichtung und einer Freiweg-Anordnung eines Gasinjektors gemäß einem fünften Ausführungsbeispiel der Erfindung im geschlossenen Zustand.

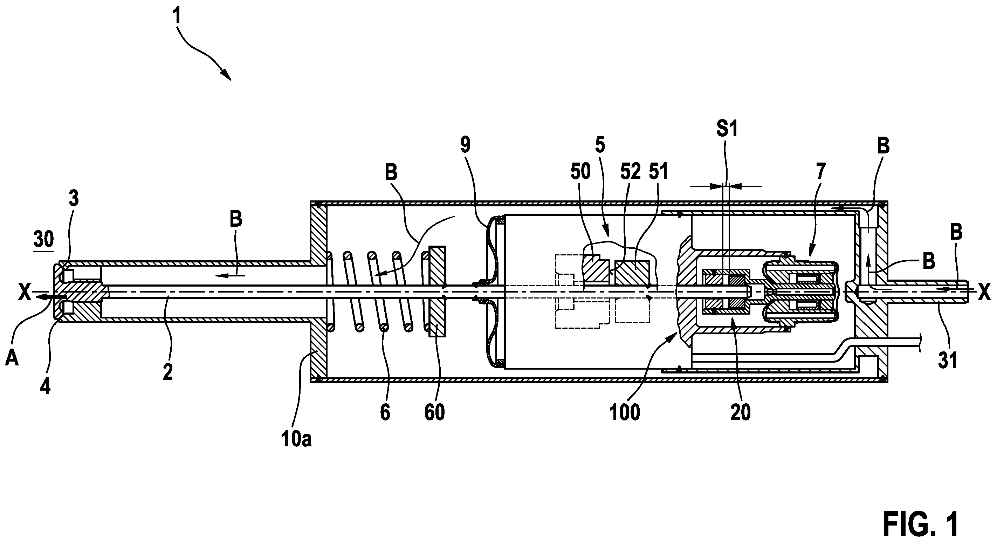

Nachfolgend wird unter Bezugnahme auf die Figuren 1 bis 5 ein Gasinjektor 1 gemäß einem ersten bevorzugten Ausführungsbeispiel der Erfindung im Detail beschrieben.

Wie aus Figur 1 ersichtlich ist, umfasst der Gasinjektor zum Einblasen eines gasförmigen Mediums in einen Brennraum 30 einer Brennkraftmaschine ein Schließelement 2 und einen Aktor 5 zur Betätigung des Schließelements 2. Das Schließelement 2 ist eine Ventilnadel. Der Aktor 5 ist ein magnetischer Aktor mit einem Innenpol 50 und einem mit dem Schließelement 2 verbundenen Anker 51. Am Innenpol 50 ist ein Anschlag 52 zur Begrenzung eines Öffnungshubes des Schließelements ausgebildet.

Das Schließelement 2 gibt dabei eine Durchgangsöffnung 4 an einem Dichtsitz 3 frei und verschließt diese. Die Durchgangsöffnung 4 ist im geöffneten Zustand ein ringförmiger Durchlass, wobei der Gasinjektor 1 ein nach außen öffnender Injektor ist. D.h., das Schließelement 2 wird zum Öffnen in Richtung des Pfeils A nach außen in Richtung des Brennraums 30 bewegt.

Am gegenüberliegenden Ende des Dichtsitzes 3 ist ein Gaszulauf 31 vorgesehen. Wie aus Figur 1 ersichtlich ist, ist der Gaszulauf 31 dabei in Linie mit dem Schließelement 2 auf einer Mittelachse, welche eine Axialrichtung X-X des Gasinjektors definiert, angeordnet.

In Figur 1 deuten die Pfeile B die Gasströmung durch den Gasinjektor 1 ausgehend vom Gaszulauf 31 bis zum Dichtsitz 3 an.

Wie weiter aus Figur 1 ersichtlich ist, ist der Aktor 5 mittels einer Metallmembran 9 gegenüber dem gasförmigen Medium abgedichtet. Die Metallmembran 9 ist dabei mittels einer Schweißverbindung mit dem Schließelement 2 verbunden. Die Metallmembran 9 weist hierbei eine mittige Öffnung auf, durch welche das Schließelement 2 hindurchgeführt ist.

Ferner umfasst der Gasinjektor 1 ein Rückstellelement 6, welches in diesem Ausführungsbeispiel eine zylindrische Schraubenfeder ist. Das Rückstellelement 6 stellt das Schließelement 2 aus dem offenen Zustand wieder in den geschlossenen Ausgangszustand zurück. Hierbei stützt sich das Rückstellelement 6 an einem Federteller 60 und einem Gehäusebauteil 10a ab.

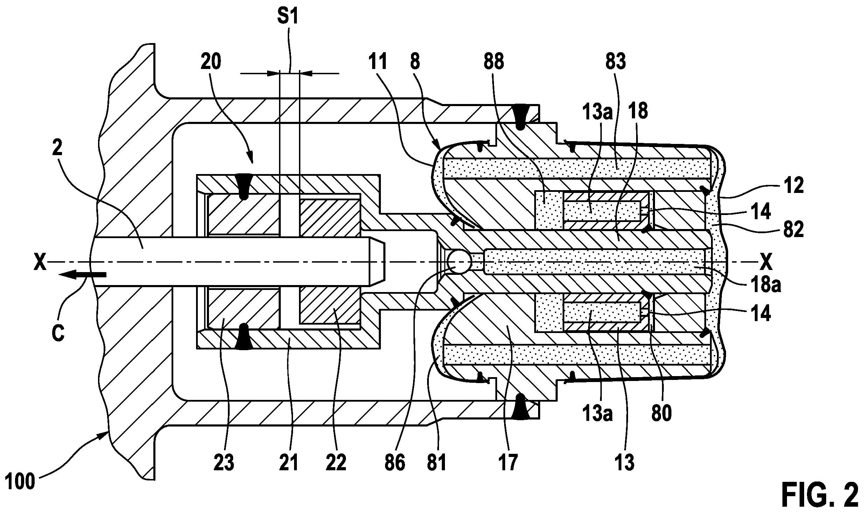

Der Gasinjektor 1 umfasst ferner eine hydraulische Dämpfungseinrichtung 7, welche insbesondere im Detail unter Bezugnahme auf die Figuren 2 bis 5 beschrieben wird.

Die hydraulische Dämpfungseinrichtung 7 ist zur Dämpfung einer Bewegung des Schließelements 2 eingerichtet. Hierbei werden Bewegungen während des Öffnungsvorgangs als auch während des Schließvorgangs gedämpft. Die hydraulische Dämpfungseinrichtung ist dabei eingerichtet, die Dämpfung mittels einer Flüssigkeit in einem abgeschlossenen Hydraulikraum 8 der Dämpfungseinrichtung 7 auszuführen.

Die hydraulische Dämpfungseinrichtung 7 umfasst dabei einen ersten Steuerraum 80 und einen zweiten Steuerraum 88. Die beiden Steuerräume 80, 88 sind dabei in einem Grundkörper 17 der hydraulischen Dämpfungseinrichtung 7 angeordnet. Der erste Steuerraum 80 dient dabei zur Dämpfung einer Rückstellbewegung des Schließelements und der zweite Steuerraum 88 dient zur Dämpfung einer Öffnungsbewegung des Schließelements.

Wie aus Figur 2 ersichtlich ist, ist an einem Zentrierbolzen 18 ein Steuerzylinder 13 angeordnet. Der Steuerzylinder 13 weist mehrere Bohrungen 13a auf, welche den ersten Steuerraum 80 mit dem zweiten Steuerraum 88 verbinden. In den Bohrungen ist hierbei jeweils eine Drossel 14 ausgebildet, wobei durch Wahl eines Bohrungsdurchmessers für die Drosseln 14 eine Stärke der Dämpfung beim Öffnungs- und Schließvorgang einstellbar ist.

Weiterhin umfasst die Dämpfungseinrichtung 7 ein erstes flexibles Element 11 und ein zweites flexibles Element 12. Das erste und zweite flexible Element 11, 12 ist in diesem Ausführungsbeispiel eine Metallmembran. Wie aus Figur 2 ersichtlich ist, wird der abgeschlossene Hydraulikraum 8 durch Hohlräume im Grundkörper 17 sowie das erste und zweite flexible Element 11, 12 gebildet. Hierbei ist das erste flexible Element 11 mit einer mittigen Öffnung versehen, durch welche der Zentrierbolzen 18 hindurchgeführt ist. Das erste flexible Element 11 ist dabei mittels einer Schweißverbindung mit dem Zentrierbolzen 18 verbunden.

Der abgeschlossene Hydraulikraum 8 ist mit einer Flüssigkeit, beispielsweise Öl, gefüllt. Wie aus Figur 2 ersichtlich ist, ist hierbei der Zentrierbolzen 18 mit einer Durchgangsbohrung 18a ausgebildet, welche durch eine Kugel 86 verschlossen ist. Hierbei kann eine einfache Befüllung des abgeschlossenen Hydraulikraums 8 ermöglicht werden.

Das zweite flexible Element 12 ist an der zum Gaszulauf 31 gerichteten Stirnfläche des Grundkörpers 17 fluiddicht an diesem angeordnet. Da das erste und zweite flexible Element 11, 12 vorzugsweise Metallmembranen sind, kann eine Fluiddichtheit mit dem Grundkörper 17 auf einfache Weise durch Schweißverbindungen hergestellt werden.

Zwischen dem Grundkörper 17 und dem ersten flexiblen Element 11 ist ein erster Unterraum 81 des Hydraulikraums ausgebildet. Zwischen dem Grundkörper 17 und dem zweiten flexiblen Element 12 ist ein zweiter Unterraum 82 ausgebildet. Der erste und zweite Unterraum ist über einen Verbindungsbereich 83, welcher eine Verbindungsbohrung ist, miteinander in Fluidverbindung.

Ferner umfasst der Gasinjektor 1 eine Freiweg-Anordnung 20. Die Freiweg-Anordnung 20 ist in Axialrichtung X-X zwischen der hydraulischen Dämpfungseinrichtung 7 und dem Aktor 5 angeordnet (vgl. Figur 1).

Die Freiweg-Anordnung 20 umfasst ein Freiweg-Gehäuse 21, ein Steuerelement 22, welches in diesem Ausführungsbeispiel eine Steuerscheibe ist, und ein Anschlagelement 23. Wie aus Figur 2 ersichtlich ist, ist das Anschlagelement 23 fest mit dem Freiweg-Gehäuse 21 mittels einer Schweißverbindung verbunden. Das Steuerelement 22 ist an einem vom Brennraum 30 abgewandten Seite des Schließelements 2 angeordnet. Hierbei ist eine feste Verbindung zwischen dem Steuerelement 22 und dem Ende des Schließelements 2 vorgesehen. Dies kann beispielsweise eine Schweißverbindung oder eine Pressverbindung oder eine beliebige andere feste mechanische Verbindung sein.

Das Freiweg-Gehäuse 21 ist mit dem Zentrierbolzen 18 verbunden, wobei das Freiweg-Gehäuse 21 und der Zentrierbolzen 18 z.B. als ein einziges, gemeinsames Bauteil ausgebildet sind. Der Aufbau des Freiweg-Gehäuses 21 und des Zentrierbolzens kann jedoch auch mehrteilig sein.

Der Gasinjektor 1 umfasst ferner ein topfförmiges Stellmodulgehäuse 100, in welchem die Freiweg-Anordnung 20 und teilweise die Dämpfungseinrichtung 7 angeordnet ist. Das Stellmodulgehäuse ist dabei mit einer Schweißverbindung mit einem Außenumfang des Grundkörpers 17 der Dämpfungseinrichtung 7 verbunden.

Die Funktion des erfindungsgemäßen Gasinjektors 1 mit wegoptimierter Dämpfungsfunktion ist dabei wie folgt. Ausgehend von der in Figur 1 und 2 gezeigten geschlossenen Stellung des Gasinjektors 1 wird der Aktor 5 betätigt. Dadurch wird der Anker 51 in Richtung des Innenpols 50 angezogen, so dass das Schließelement 2 vom Dichtsitz 3 abhebt und die Durchgangsöffnung 4 freigibt. Dabei wird das Rückstellelement 6 vorgespannt.

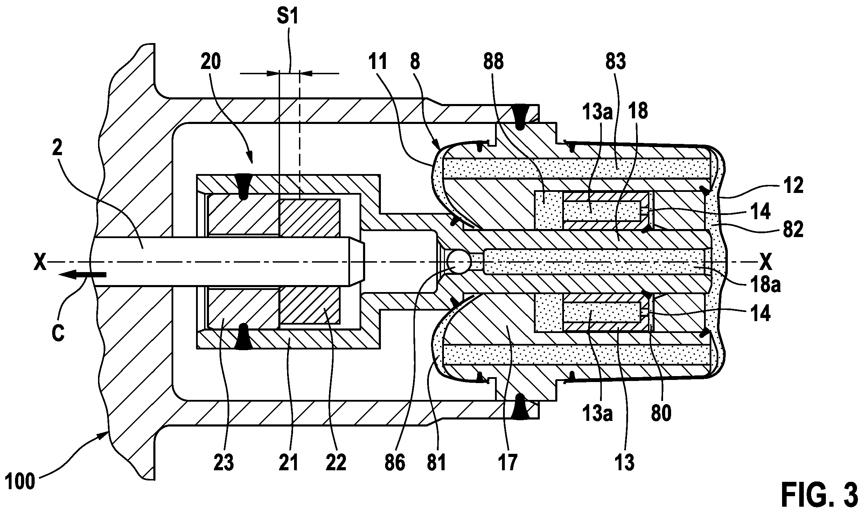

In Figur 2 ist der Öffnungsvorgang für das Schließelement 2 durch den Pfeil C angedeutet. Im geschlossenen Zustand des Gasinjektors existiert zwischen dem Anschlagelement 23 und dem Steuerelement 22 in Axialrichtung ein Freiweg S1. Da das Steuerelement 22 mit dem Schließelement 2 verbunden ist, wird während des Öffnungsvorgangs dieser Freiweg S1 zurückgelegt, bis das Steuerelement 22 am Anschlagelement 23 anschlägt. Dieser Zustand ist in Figur 3 gezeigt.

Bis zu dem in Figur 3 gezeigten Zustand erfolgt keinerlei Dämpfung während des Öffnungsvorgangs des Gasinjektors. Der Gasinjektor ist jedoch noch nicht vollständig geöffnet. Für den restlichen Öffnungsweg des Gasinjektors erfolgt nun eine Dämpfung durch die hydraulische Dämpfungseinrichtung 7.

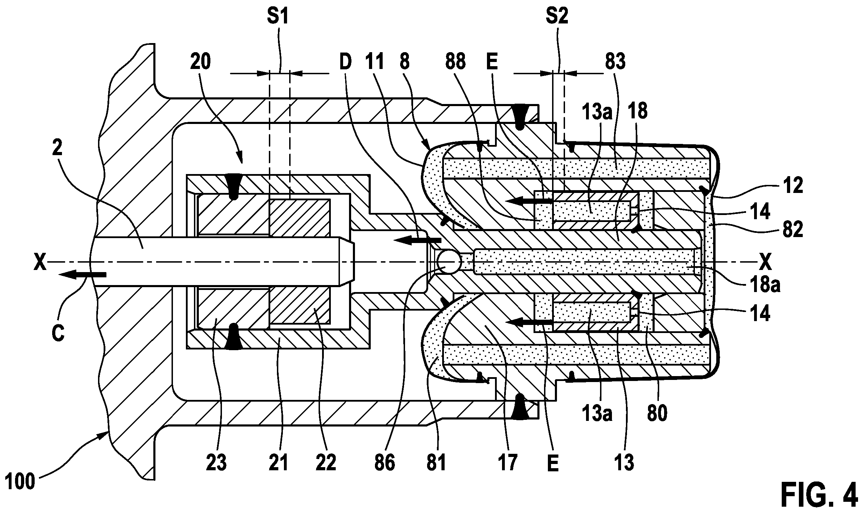

Da, wie in Figur 3 durch den Pfeil C angedeutet, das Schließelement 2 weiter in Öffnungsrichtung bewegt wird, wird durch den Kontakt zwischen dem Steuerelement 22 und dem Anschlagelement 23 auch das Freiweg-Gehäuse 21 und dadurch auch der Zentrierbolzen 18 in Richtung des Pfeils C bewegt. Dies ist in Figur 4 durch den Pfeil D am Zentrierbolzen 18 angedeutet. Da der Steuerzylinder 13 fest mit dem Zentrierbolzen 18 verbunden ist, wird dieser, wie durch die Pfeile E angedeutet, ebenfalls in Öffnungsrichtung bewegt. Hierdurch ändert sich jedoch das Volumen des ersten Steuerraums 80 und des zweiten Steuerraums 88. Genauer wird das Volumen des ersten Steuerraums 80 größer und das Volumen des zweiten Steuerraums 88 verringert sich. Da die beiden Steuerräume 80, 88 über die Bohrung 13 und die Drossel 14 miteinander in Fluidverbindung stehen, ergibt sich dadurch eine Dämpfung der Bewegung des Schließelements, bis letztendlich der Anker 51 am Innenpol 50 anschlägt.

In Figur 4 ist hierbei ein Dämpfungsweg S2, welcher durch den Steuerzylinder 13 zurückgelegt wird, eingezeichnet. Somit beträgt der maximale Öffnungshub des Schließelements 2 die Addition des Freiwegs S1 und des Dämpfungswegs S2. Die Dämpfungsstärke kann hierbei auf einfache Weise durch Wahl der Bohrungsdurchmesser für die Drosseln 14 eingestellt werden.

Wie weiter aus Figur 4 ersichtlich ist, ändert sich auch das Volumen des ersten Unterraums 81 und des zweiten Unterraums 82, da das erste flexible Element 11 direkt mit dem sich in Axialrichtung X-X bewegenden Zentrierbolzen 18 verbunden ist. Genauer wird das Volumen des ersten Unterraums 81 größer und das Volumen des zweiten Unterraums 82 reduziert sich in entsprechender Weise (vgl. Figur 4).

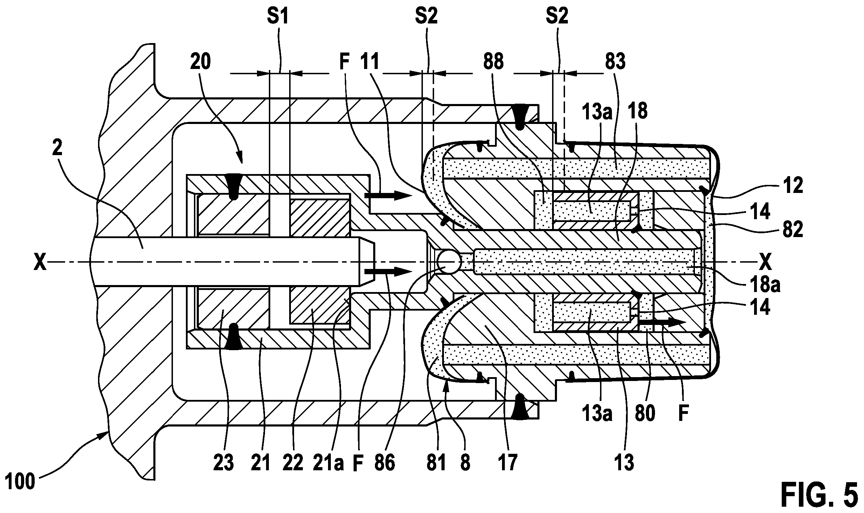

Für den Schließvorgang des Gasinjektors wird die Bestromung des Aktors 5 beendet, so dass durch das vorgespannte Rückstellelement 6 eine Rückstellkraft auf das Schließelement 2 ausgeübt wird. Figur 5 zeigt dabei den ersten Bewegungsweg für den Rückstellvorgang, wobei das mit dem Schließelement 2 verbundene Steuerelement 22 zuerst den Freiweg S1 zurücklegt, bis es an einem Absatz 21a des Freiweg-Gehäuses 21 anliegt. Dieser Zustand ist in Figur 5 gezeigt. Bis zu diesem Zeitpunkt während des Rückstellvorgangs bleibt die hydraulische Dämpfungseinrichtung 7 ohne Dämpfungswirkung.

Sobald das Steuerelement 22 am Absatz 21a des Freiweg-Gehäuses 21 anliegt, wird durch die weiter vorhandene Rückstellbewegung des Rückstellelements 6 auch das Freiweg-Gehäuse 21 und dadurch auch der mit dem Freiweg-Gehäuse 21 verbundene Zentrierbolzen 18 zurückbewegt. Dadurch wird auch der Steuerzylinder 13 in die in Figur 2 gezeigte Ausgangsstellung zurückbewegt. Die Zurückbewegungen der Bauteile sind in Figur 5 durch die Pfeile F gekennzeichnet.

Sobald somit das Steuerelement 22 am Freiweg-Gehäuse 21 anliegt, erfolgt nun durch die Bewegung des Zentrierbolzens 18 eine Dämpfung mittels der hydraulischen Dämpfungseinrichtung 7, da sich die Volumina im ersten Steuerraum 80 und zweiten Steuerraum 88 wieder an die in Figur 2 gezeigte Ausgangsstellung angleichen. In gestrichelter Weise ist in Figur 5 dabei der maximale Dämpfungsweg S2 angedeutet, welcher zurückgelegt werden muss, bis das Schließelement 2 am Dichtsitz 3 vollständig abdichtet. Somit wird nur die letzte Bewegung bei der Rückstellung des Gasinjektors gedämpft.

Erfindungsgemäß kann somit durch das geschickte Vorsehen des Freiwegs S1 mittels der Freiweg-Anordnung 20 eine Dämpfung während des Öffnungsvorgangs erst auf den letzten Öffnungsweg des Schließelements begrenzt werden. In gleicher Weise ist beim Schließvorgang eine Dämpfungswirkung durch die hydraulische Dämpfungseinrichtung 7 auf den letzten axial zurückgelegten Weg des Schließelements 2 (Dämpfungsweg S2) begrenzt. Dadurch ist es möglich, dass die hydraulische Dämpfungseinrichtung 7 sehr kleinbauend und besonders kostengünstig mit jeweils nur einem flexiblen Element 11, 12 an jedem Ende des Grundkörpers ausgebildet werden. Weiterhin ist ein Innen- und Außendurchmesser des ersten und zweiten Steuerraums 80, 88 gleich. Dadurch kann insbesondere der Grundkörper 17 sehr einfach aufgebaut sein. Durch entsprechend ausgebildete Radialspalte zwischen dem Zentrierbolzen 18 und dem Grundkörper 17 bzw. dem Steuerelement 22 und dem Grundkörper 17 kann dabei die Beweglichkeit des Zentrierbolzens 18 sichergestellt werden. Hierbei ist durch Wahl der Spalthöhe der Radialspalte am Zentrierbolzen 18 bzw. dem Steuerelement 22 auch eine weitere Möglichkeit zur Beeinflussung der Dämpfungswirkung gegeben.

Somit kann erfindungsgemäß die Dämpfung auf den jeweils letzten Wegabschnitt bei der Öffnung und beim Schließen des Gasinjektors begrenzt werden. Der Freiweg S1 ist dabei größer als der Dämpfungsweg S2. Dadurch können schnelle Schaltzeiten erreicht werden und weiterhin kann durch die erste ungedämpfte Bewegung des Schließelements beim Öffnen schnell eine Gaseinblasung in größerem Umfang erfolgen. Gleiches gilt entsprechend für den Schließvorgang, welcher in großem Umfang durch den ersten ungedämpften Schließweg möglich ist.

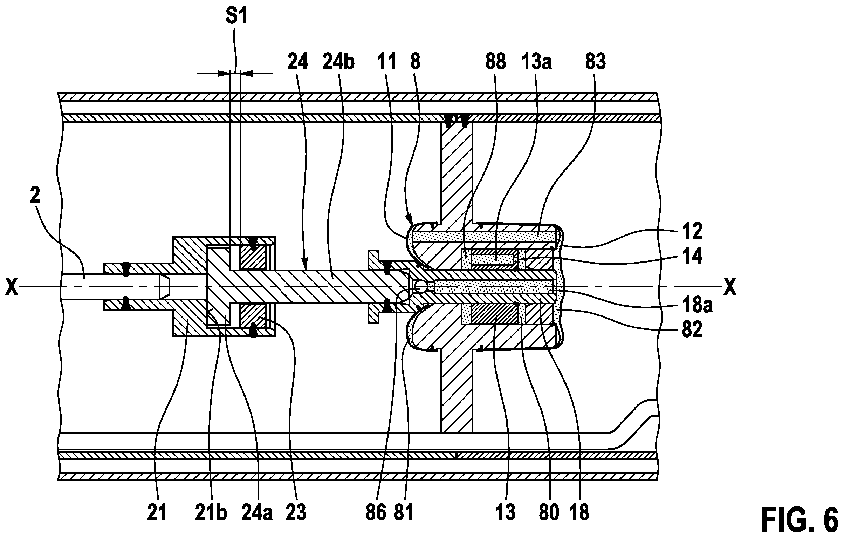

Figur 6 zeigt schematisch eine Teil-Schnittansicht eines Gasinjektors gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Im Unterschied zum ersten Ausführungsbeispiel ist beim zweiten Ausführungsbeispiel das Freiweg-Gehäuse 21 direkt mit dem Schließelement 2 verbunden. Weiterhin umfasst die Freiweg-Anordnung 20 einen Steuerstift 24, welcher einen im Freiweg-Gehäuse 21 angeordneten Kopf 24a und einen mit dem Zentrierbolzen 18 verbundenen Schaft 24b aufweist. Die Verbindung zwischen dem Steuerstift 24 und dem Zentrierbolzen 18 kann beispielsweise mittels einer Schweißverbindung realisiert werden. Somit wird beim zweiten Ausführungsbeispiel beim Öffnungsvorgang das Freiweg-Gehäuse 21 gemeinsam mit dem Schließelement 2 zuerst solange bewegt, bis der Freiweg S1 zurückgelegt ist. Dann liegt der Kopf des Steuerstifts 24 am Anschlagelement 23 an, so dass bei der weiteren Öffnungsbewegung des Schließelements 2 der Steuerstift 24 ebenfalls in Axialrichtung bewegt wird. Da der Steuerstift 24 mit dem Zentrierbolzen 18 fest verbunden ist, erfolgt dann entsprechend wie im ersten Ausführungsbeispiel beschrieben, eine Dämpfung während des restlichen Öffnungsweges durch die hydraulische Dämpfungseinrichtung 7. Beim Schließvorgang legt der Steuerstift 24 wie beim ersten Ausführungsbeispiel zuerst den Freiweg S1 zurück, bis der Kopf des Steuerstifts 24 mit einer Anschlagfläche 21b am Freiweg-Gehäuse 21 anliegt und dann eine Rückstellung des Zentrierbolzens 18 über den Steuerstift 24 ermöglicht wird. Dann wird auch der letzte Schließweg des Schließelements 2 durch die Dämpfungseinrichtung 7 gedämpft. Ansonsten entspricht dieses Ausführungsbeispiel dem ersten Ausführungsbeispiel, so dass auf die dort gegebene Beschreibung verwiesen werden kann.

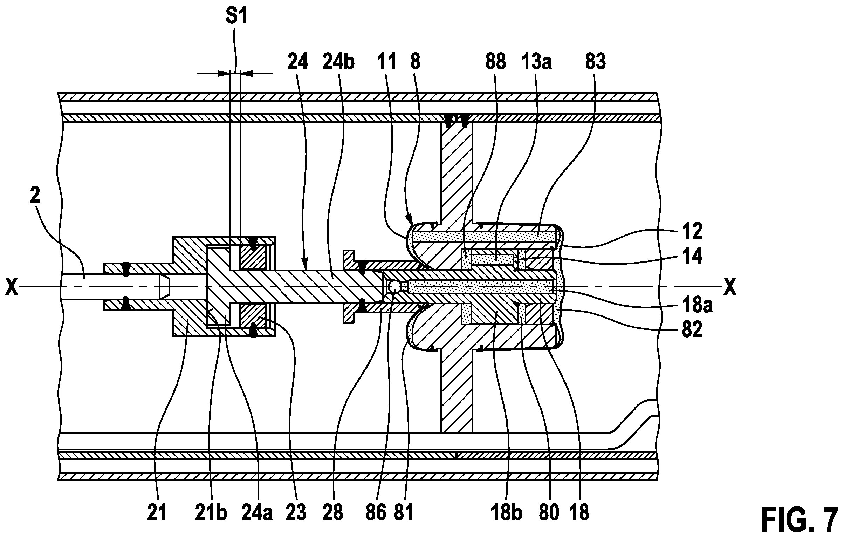

Figur 7 zeigt eine Teil-Schnittansicht eines Gasinjektors gemäß einem dritten Ausführungsbeispiel der Erfindung. Gleiche bzw. funktional gleiche Teile sind wiederum mit den gleichen Bezugszeichen wie in den vorhergehenden Ausführungsbeispielen bezeichnet.

Das dritte Ausführungsbeispiel entspricht im Wesentlichen dem zweiten Ausführungsbeispiel, wobei die Freiweg-Anordnung 20 ebenfalls einen Steuerstift 24 umfasst. Hierbei ist der Zentrierbolzen 18 beim dritten Ausführungsbeispiel jedoch zweiteilig ausgebildet, wobei zur Verbindung des Zentrierbolzens 18 mit dem Steuerstift 24 eine Hülse 28 vorgesehen ist. Weiterhin ist beim dritten Ausführungsbeispiel der in den ersten beiden Ausführungsbeispielen vorhandene Steuerzylinder einteilig mit dem Zentrierbolzen 18 ausgebildet, was in Figur 7 durch das Bezugszeichen 18b angedeutet ist. Ansonsten entspricht dieses Ausführungsbeispiel dem vorhergehenden Ausführungsbeispiel, so dass auf die dort gegebene Beschreibung verwiesen werden kann.

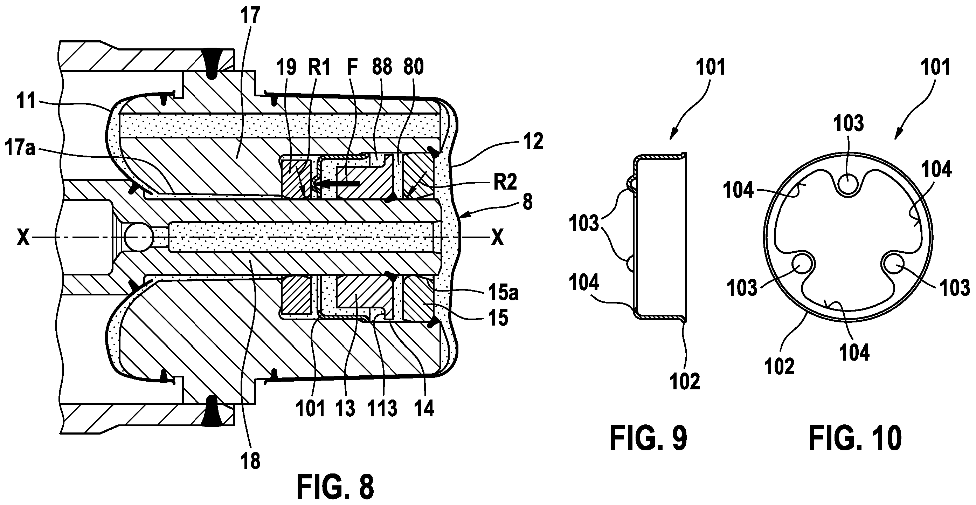

Die Figuren 8 bis 10 zeigen einen Gasinjektor gemäß einem vierten Ausführungsbeispiel der Erfindung. Gleiche bzw. funktional gleiche Teile sind mit den gleichen Bezugszeichen wie in den vorhergehenden Ausführungsbeispielen bezeichnet.

Das vierte Ausführungsbeispiel ermöglicht im Vergleich zu den vorhergehenden Ausführungsbeispielen eine Reduzierung einer Leckage vom ersten Steuerraum 80 und vom zweiten Steuerraum 88 in den Hydraulikraum 8. Somit kann insbesondere über eine sehr lange Betriebsdauer eine sichere Funktion der hydraulischen Dämpfungseinrichtung 7 sichergestellt werden. Hierzu weist das vierte Ausführungsbeispiel im Unterschied zu den vorhergehenden Ausführungsbeispielen eine geänderte Führung des Zentrierbolzens 18 auf. Wie aus Figur 8 ersichtlich ist, ist der Zentrierbolzen 18 an einer Dichtscheibe 19 geführt. Die Dichtscheibe 19 weist an einem inneren Umfangsbereich einen Radius R1 auf, so dass sich eine Kontaktlinie zwischen der Dichtscheibe 19 und dem Zentrierbolzen 18 zur Führung ergibt. Dadurch kann der Spalt im Bereich zwischen der Dichtscheibe 19 und dem Zentrierbolzen 18 sehr klein gehalten werden.

Ferner ist eine Federscheibe 110 vorgesehen, welche in Axialrichtung X-X eine Federkraft F auf die Dichtscheibe 19 ausübt. Dadurch ergibt sich eine axiale Abdichtung zwischen der Dichtscheibe 19 und dem Grundkörper 17 der hydraulischen Dämpfungseinrichtung 7.

Wie im Detail aus den Figuren 9 und 10 ersichtlich ist, welche die Federscheibe 110 in Schnittansicht (Figur 9) und in Draufsicht (Figur 10) zeigen, weist die Federscheibe 101 eine im Wesentlichen topfförmige Gestalt auf, wobei der Boden eine zentrale Öffnung aufweist, durch welche der Zentrierbolzen 18 hindurchgeführt ist. Die Federscheibe 101 umfasst einen Haltebereich 102, welcher an einem äußeren Umfang der Federscheibe 101 angeordnet ist und kraftschlüssig am Grundkörper 17 fixiert ist. Ferner sind drei Nocken 103 vorgesehen, welche in gleichen Abständen (vgl. Figur 10) von 120° angeordnet sind und sich mit der Dichtscheibe 19 in Kontakt befinden. Über die Nocken 103 wird die Federkraft F auf die Dichtscheibe 19 ausgeübt. Zwischen den Nocken sind Durchbrüche 104 vorgesehen, um bei Bewegung des Zentrierbolzens 18 in Axialrichtung X-X eine ausreichende Bewegung des Zentrierbolzens zu ermöglichen.

Dabei ist der Steuerzylinder 13 zumindest teilweise in der topfförmigen Federscheibe 101 angeordnet. Wie insbesondere aus Figur 8 ersichtlich ist, weist der Steuerzylinder 13 einen radial nach außen gerichteten Flansch 113 auf, wobei zwischen dem Flansch 113 und dem Grundkörper 17 ein Drosselspalt 14 ausgebildet ist. Über diesen Drosselspalt 14 kann das Fluid vom ersten Steuerraum 80 in den zweiten Steuerraum 88 strömen und umgekehrt.

Ferner ist ein Dichtring 15 vorgesehen, an dessen inneren Umfang ein zweiter Radius R2 und ein Kegel 15a ausgebildet ist. Hierdurch ist der erste Steuerraum 80 relativ gut gegenüber dem Hydraulikraum 8 abgedichtet.

Wie weiter aus Figur 8 ersichtlich ist, ist am Grundkörper 17 ein Kegel 17a zwischen dem Grundkörper und dem Zentrierbolzen 18 ausgebildet, so dass Fluid aus dem Hydraulikraum 8 bis zur Dichtscheibe 19 reicht. Hierdurch wird insbesondere eine gute Bewegbarkeit des Zentrierbolzens 18 sichergestellt.

Das erste flexible Element 11, welches mit dem Zentrierbolzen 18 verbunden ist, weist eine relativ hohe radiale Steifigkeit auf. Daher kann das erste flexible Element 11 nicht oder nur bedingt radiale Toleranzen ausgleichen. Gemäß dem vierten Ausführungsbeispiel wird der Zentrierbolzen 18 nun an der Dichtscheibe 19 radial geführt. Dabei kann ein sehr kleiner Radialspalt realisiert werden.

Durch das Vorsehen des Kegels 17a am Grundkörper 17 und des Kegels 15a am Dichtring 15 kann auch eine möglicherweise im Betrieb auftretende Schrägstellung des Zentrierbolzens 18 sehr gut ausgeglichen werden. Ein Kegelwinkel liegt dabei vorzugsweise jeweils in einem Bereich von 0,5° bis 30°, insbesondere 1° bis 10°. Ansonsten entspricht dieses Ausführungsbeispiel den vorhergehenden Ausführungsbeispielen, so dass auf dort gegebene Beschreibung verwiesen werden kann.

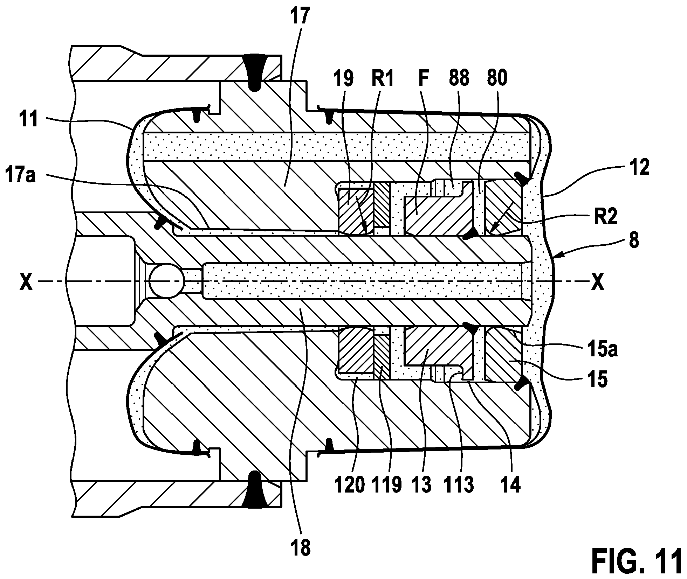

Nachfolgend wird unter Bezugnahme auf Figur 11 ein Gasinjektor gemäß einem fünften Ausführungsbeispiel der Erfindung im Detail beschrieben. Gleiche bzw. funktional gleiche Teile sind mit den gleichen Bezugszeichen wie in den vorhergehenden Ausführungsbeispielen bezeichnet.

Das fünfte Ausführungsbeispiel entspricht im Wesentlichen dem vierten Ausführungsbeispiel, wobei statt der im vierten Ausführungsbeispiel verwendeten Federscheibe beim fünften Ausführungsbeispiel eine eingepresste Scheibe 119 verwendet wird, um die Dichtscheibe 19 gegen den Grundkörper 17 der hydraulischen Dämpfungseinrichtung 7 zu drücken. Zwischen der eingepressten Scheibe 119 und dem Grundkörper 17 ist dabei eine Pressverbindung ausgebildet. Wie im vierten Ausführungsbeispiel führt die Dichtscheibe 19 an einem inneren Umfangsbereich, welcher den Radius R1 aufweist, den Zentrierbolzen 18. Radial am äußeren Umfang verbleibt an der Dichtscheibe 19 dabei ein mit Fluid gefüllter Raum 120, so dass der Zentrierbolzen gegebenenfalls auch in Radialrichtung gerichtete Ausgleichsbewegungen ausführen kann. Ansonsten entspricht dieses Ausführungsbeispiel den vorhergehenden Ausführungsbeispielen, so dass auf die dort gegebene Beschreibung verwiesen werden kann.

## Patentansprüche

1. Gasinjektor zum Einblasen eines gasförmigen Mediums, umfassend:
- ein Schließelement (2), welches eine Durchgangsöffnung (4) an einem Dichtsitz (3) freigibt und verschließt,
- ein Rückstellelement (6), welches das Schließelement (2) in eine geschlossene Ausgangsstellung zurückstellt,
- ein Aktor (5), welcher das Schließelement (2) betätigt,
- eine hydraulische Dämpfungseinrichtung (7) zur Dämpfung einer Bewegung des Schließelements (2), wobei die hydraulische Dämpfungseinrichtung (7) eingerichtet ist, eine Dämpfung mittels einer Flüssigkeit in einem abgeschlossenen Hydraulikraum (8) bereitzustellen,
**gekennzeichnet, durch**
- eine Freiweg-Anordnung (20), welche zwischen dem Schließelement (2) und der hydraulischen Dämpfungseinrichtung (7) angeordnet ist und eingerichtet ist, die Dämpfung der Bewegung des Schließelements (2) erst nach Zurücklegen eines vorbestimmten Freiweges (S1) auszuführen.

2. Gasinjektor nach Anspruch 1, wobei ein vollständiger Öffnungshub des Schließelements (2) den Freiweg (S1) und einen Dämpfungsweg (S2) der hydraulischen Dämpfungseinrichtung (7) umfasst.

3. Gasinjektor nach Anspruch 2, wobei der Dämpfungsweg (S2) kleiner ist als der Freiweg (S1).

4. Gasinjektor nach Anspruch 3, wobei ein Verhältnis des Dämpfungswegs (S2) zum Freiweg (S1) in einem Bereich von 0,06 bis 0,12 liegt, und insbesondere in einem Bereich von 0,08 bis 0,10 liegt.

5. Gasinjektor nach einem der vorhergehenden Ansprüche,
- wobei die Freiweg-Anordnung (20) ein Freiweg-Gehäuse (21), ein im Freiweg-Gehäuse (21) angeordnetes Steuerelement (22) und ein am Freiweg-Gehäuse (21) fixiertes Anschlagelement (23) umfasst, wobei der Freiweg (S1) zwischen dem Steuerelement (22) und dem Anschlagelement (23) ausgebildet ist oder
- wobei der Freiweg (S1) zwischen dem Steuerelement (22) und dem Freiweg-Gehäuse (21) ausgebildet ist.

6. Gasinjektor nach Anspruch 5, wobei das Freiweg-Gehäuse (21) mit der hydraulischen Dämpfungseinrichtung (7) verbunden ist und das Steuerelement (22) mit dem Schließelement (2) verbunden ist, oder wobei das Freiweg-Gehäuse (21) mit dem Schließelement (2) verbunden ist und das Steuerelement (22) mit der hydraulischen Dämpfungseinrichtung (7) verbunden ist.

7. Gasinjektor nach einem der vorhergehenden Ansprüche, wobei die hydraulische Dämpfungseinrichtung (7) einen Grundkörper (17) und einen im Grundkörper (17) axial beweglich angeordneten Zentrierbolzen (18) umfasst, wobei der Zentrierbolzen (18) in Wirkverbindung mit der Freiweg-Anordnung (20) ist.

8. Gasinjektor nach einem der vorhergehenden Ansprüche, wobei die hydraulische Dämpfungseinrichtung (7) einen ersten Steuerraum (80) und einen zweiten Steuerraum (88) aufweist, welche über eine Fluidverbindung miteinander in Verbindung stehen.

9. Gasinjektor nach Anspruch 8, wobei die Fluidverbindung eine Drossel (14) umfasst, welche in einem Steuerzylinder (13), der den ersten Steuerraum (80) vom zweiten Steuerraum (88) trennt, angeordnet ist, wobei über die Drossel (14) eine Dämpfung des Schließelements (2) beim Öffnungsvorgang und beim Schließvorgang durch Volumenänderung im ersten und zweiten Steuerraum erfolgt.

10. Gasinjektor nach einem der vorhergehenden Ansprüche, wobei die Dämpfungseinrichtung (7) einen Grundkörper (17), ein erstes flexibles Element (11) und ein zweites flexibles Element (12) aufweist, wobei das Schließelement (2) mit dem ersten flexiblen Element (11) in Verbindung steht und das erste flexible Element (11) und das zweite flexible Element (12) Gehäusebereiche des abgeschlossenen Hydraulikraums (8) bilden.

11. Gasinjektors nach Anspruch 10, wobei das erste und/oder zweite flexible Element Metallmembranen sind und/oder wobei das erste und zweite flexible Element Faltenbälge sind.

12. Gasinjektor nach Anspruch 10 oder 11, wobei das erste flexible Element (11) derart am Grundkörper (17) angeordnet ist, dass zwischen dem Grundkörper (17) und dem ersten flexiblen Element (11) ein erster Unterraum (81) des Hydraulikraums (8) ausgebildet ist und
wobei das zweite flexible Element (12) derart am Grundkörper (17) angeordnet ist, dass zwischen dem Grundkörper (17) und dem zweiten flexiblen Element (12) ein zweiter Unterraum (82) des Hydraulikraums (8) ausgebildet ist, wobei der erste und zweite Unterraum (81, 82) über einen Verbindungsbereich (83) miteinander in Fluidverbindung stehen.

13. Gasinjektor nach einem der vorhergehenden Ansprüche, wobei die Freiweg-Anordnung (20) und die Dämpfungseinrichtung (7) in Axialrichtung (X-X) des Gasinjektors an einer vom Dichtsitz (3) abgewandten Seite des Aktors (5) angeordnet sind.

14. Gasinjektor nach Anspruch 13, wobei die Freiweg-Anordnung (20) und die hydraulische Dämpfungseinrichtung (7) als vormontiertes Modul (100) ausgebildet sind.

15. Gasinjektor nach einem der Ansprüche 7 bis 14, wobei der Zentrierbolzen (18) mittels des ersten flexiblen Elements (11) und einer Dichtscheibe (19) geführt ist, wobei die Dichtscheibe (19) mittels einer Federscheibe (101) vorgespannt ist.

16. Gasinjektor nach Anspruch 15, wobei die Federscheibe (101) topfförmig mit einem Halterand (102), in Axialrichtung (X-X) vorstehende Nocken (103) und axialen Durchbrüchen (104) ausgebildet ist.

17. Gasinjektor nach einem der Ansprüche 7 bis 14, wobei der Zentrierbolzen (18) mittels des ersten flexiblen Elements (11) und einer Dichtscheibe (19) geführt ist, wobei die Dichtscheibe (19) mittels einer eingepressten Scheibe (119), welche mittels einer Pressverbindung mit dem Grundkörper (17) der hydraulischen Dämpfungseinrichtung verbunden ist, in Axialrichtung vorspannt.

18. Gasinjektor nach Anspruch 17, wobei am radial äußeren Umfang der Dichtscheibe (19) ein mit Flüssigkeit gefüllter Ausgleichsraum (120) vorhanden ist.

## Claims

1. Gas injector for injecting a gaseous medium, comprising:
- a closing element (2) which opens up and closes off a passage opening (4) at a sealing seat (3),
- a restoring element (6) which returns the closing element (2) into a closed starting position,
- an actuator (5) which actuates the closing element (2),
- a hydraulic damping device (7) for damping a movement of the closing element (2), wherein the hydraulic damping device (7) is configured to provide damping by means of a liquid in a closed-off hydraulic space (8), **characterized by**
- a free-travel arrangement (20) which is arranged between the closing element (2) and the hydraulic damping device (7) and is configured to perform the damping of the movement of the closing element (2) only after a predetermined free travel (S1) has been covered.

2. Gas injector according to Claim 1, wherein a complete opening stroke of the closing element (2) comprises the free travel (S1) and a damping travel (S2) of the hydraulic damping device (7).

3. Gas injector according to Claim 2, wherein the damping travel (S2) is shorter than the free travel (S1).

4. Gas injector according to Claim 3, wherein a ratio of the damping travel (S2) to the free travel (S1) lies in a range from 0.06 to 0.12, and in particular in a range from 0.08 to 0.10.

5. Gas injector according to one of the preceding claims,
- wherein the free-travel arrangement (20) comprises a free-travel housing (21), a control element (22) arranged in the free-travel housing (21) and a stop element (23) fixed to the free-travel housing (21), wherein the free travel (S1) is formed between the control element (22) and the stop element (23), or
- wherein the free travel (S1) is formed between the control element (22) and the free-travel housing (21).

6. Gas injector according to Claim 5, wherein the free-travel housing (21) is connected to the hydraulic damping device (7) and the control element (22) is connected to the closing element (2), or wherein the free-travel housing (21) is connected to the closing element (2) and the control element (22) is connected to the hydraulic damping device (7).

7. Gas injector according to one of the preceding claims, wherein the hydraulic damping device (7) comprises a main body (17) and a centring pin (18) arranged in an axially movable manner in the main body (17), wherein the centring pin (18) is operatively connected to the free-travel arrangement (20).

8. Gas injector according to one of the preceding claims, wherein the hydraulic damping device (7) has a first control space (80) and a second control space (88), which are connected to one another via a fluid connection.

9. Gas injector according to Claim 8, wherein the fluid connection comprises a throttle (14) which is arranged in a control cylinder (13) that separates the first control space (80) from the second control space (88), wherein, via the throttle (14), the closing element (2) is damped during the opening process and during the closing process by way of a change in volume in the first and second control spaces.

10. Gas injector according to one of the preceding claims, wherein the damping device (7) has a main body (17), a first flexible element (11) and a second flexible element (12), wherein the closing element (2) is connected to the first flexible element (11) and the first flexible element (11) and the second flexible element (12) form housing regions of the closed-off hydraulic space (8).

11. Gas injector according to Claim 10, wherein the first flexible element and/or second flexible element are metal membranes/is a metal membrane, and/or wherein the first and second flexible elements are corrugated bellows.

12. Gas injector according to Claim 10 or 11, wherein the first flexible element (11) is arranged on the main body (17) in such a way that a first sub-space (81) of the hydraulic space (8) is formed between the main body (17) and the first flexible element (11), and
wherein the second flexible element (12) is arranged on the main body (17) in such a way that a second sub-space (82) of the hydraulic space (8) is formed between the main body (17) and the second flexible element (12), wherein the first and second sub-spaces (81, 82) are fluidically connected to one another via a connecting region (83).

13. Gas injector according to one of the preceding claims, wherein the free-travel arrangement (20) and the damping device (7) are arranged on a side of the actuator (5) that faces away from the sealing seat (3) in the axial direction (X-X) of the gas injector.

14. Gas injector according to Claim 13, wherein the free-travel arrangement (20) and the hydraulic damping device (7) are formed as a pre-assembled module (100).

15. Gas injector according to one of Claims 7 to 14, wherein the centring pin (18) is guided by means of the first flexible element (11) and a sealing disc (19), wherein the sealing disc (19) is preloaded by means of a spring disc (101).

16. Gas injector according to Claim 15, wherein the spring disc (101) is designed in a pot-shaped manner with a retaining edge (102), cams (103) protruding in the axial direction (X-X) and axial apertures (104).

17. Gas injector according to one of Claims 7 to 14, wherein the centring pin (18) is guided by means of the first flexible element (11) and a sealing disc (19), wherein the sealing disc (19) is preloaded in the axial direction by means of a pressed-in disc (119) which is connected by means of a press-fit connection to the main body (17) of the hydraulic damping device.

18. Gas injector according to Claim 17, wherein a fluid-filled compensation space (120) is present at the radially outer periphery of the sealing disc (19).

## Revendications

1. Injecteur de gaz pour l'injection d'un milieu gazeux, comprenant :
- un élément de fermeture (2) qui libère et ferme une ouverture de passage (4) au niveau d'un siège d'étanchéité (3),
- un élément de rappel (6) qui ramène l'élément de fermeture (2) dans une position initiale fermée,
- un actionneur (5) qui actionne l'élément de fermeture (2),
- un dispositif d'amortissement hydraulique (7) pour amortir un mouvement de l'élément de fermeture (2), le dispositif d'amortissement hydraulique (7) étant adapté pour fournir un amortissement au moyen d'un liquide dans un espace hydraulique fermé (8), **caractérisé par**
- un agencement de course libre (20) qui est agencé entre l'élément de fermeture (2) et le dispositif d'amortissement hydraulique (7) et qui est adapté pour n'effectuer l'amortissement du mouvement de l'élément de fermeture (2) qu'après avoir parcouru une course libre prédéterminée (S1).

2. Injecteur de gaz selon la revendication 1, dans lequel une course d'ouverture complète de l'élément de fermeture (2) comprend la course libre (S1) et une course d'amortissement (S2) du dispositif d'amortissement hydraulique (7).

3. Injecteur de gaz selon la revendication 2, dans lequel la course d'amortissement (S2) est plus petite que la course libre (S1).

4. Injecteur de gaz selon la revendication 3, dans lequel un rapport de la course d'amortissement (S2) sur la course libre (S1) se situe dans une plage de 0,06 à 0,12, et en particulier dans une plage de 0,08 à 0,10.

5. Injecteur de gaz selon l'une quelconque des revendications précédentes,
- dans lequel l'agencement de course libre (20) comprend un boîtier de course libre (21), un élément de commande (22) agencé dans le boîtier de course libre (21) et un élément de butée (23) fixé au boîtier de course libre (21), la course libre (S1) étant réalisée entre l'élément de commande (22) et l'élément de butée (23) ou
- dans lequel la course libre (S1) est réalisée entre l'élément de commande (22) et le boîtier de course libre (21).

6. Injecteur de gaz selon la revendication 5, dans lequel le boîtier de course libre (21) est relié au dispositif d'amortissement hydraulique (7) et l'élément de commande (22) est relié à l'élément de fermeture (2), ou dans lequel le boîtier de course libre (21) est relié à l'élément de fermeture (2) et l'élément de commande (22) est relié au dispositif d'amortissement hydraulique (7).

7. Injecteur de gaz selon l'une quelconque des revendications précédentes, dans lequel le dispositif d'amortissement hydraulique (7) comprend un corps de base (17) et un boulon de centrage (18) agencé de manière mobile axialement dans le corps de base (17), le boulon de centrage (18) étant en liaison active avec l'agencement de course libre (20).

8. Injecteur de gaz selon l'une quelconque des revendications précédentes, dans lequel le dispositif d'amortissement hydraulique (7) présente une première chambre de commande (80) et une deuxième chambre de commande (88) qui sont en liaison entre elles par l'intermédiaire d'une liaison fluidique.

9. Injecteur de gaz selon la revendication 8, dans lequel la liaison fluidique comprend un étranglement (14) qui est agencé dans un cylindre de commande (13) qui sépare la première chambre de commande (80) de la deuxième chambre de commande (88), un amortissement de l'élément de fermeture (2) étant effectué par l'intermédiaire de l'étranglement (14) lors du processus d'ouverture et lors du processus de fermeture par modification du volume dans la première et la deuxième chambre de commande.

10. Injecteur de gaz selon l'une quelconque des revendications précédentes, dans lequel le dispositif d'amortissement (7) comprend un corps de base (17), un premier élément flexible (11) et un deuxième élément flexible (12), l'élément de fermeture (2) étant en liaison avec le premier élément flexible (11) et le premier élément flexible (11) et le deuxième élément flexible (12) formant des zones de boîtier de la chambre hydraulique fermée (8).

11. Injecteur de gaz selon la revendication 10, dans lequel le premier et/ou le deuxième élément flexible sont des membranes métalliques et/ou dans lequel le premier et le deuxième élément flexible sont des soufflets.

12. Injecteur de gaz selon la revendication 10 ou 11, dans lequel le premier élément flexible (11) est agencé sur le corps de base (17) de telle sorte qu'un premier sous-espace (81) de l'espace hydraulique (8) est réalisé entre le corps de base (17) et le premier élément flexible (11), et
dans lequel le deuxième élément flexible (12) est agencé sur le corps de base (17) de telle sorte qu'un deuxième sous-espace (82) de la chambre hydraulique (8) est réalisé entre le corps de base (17) et le deuxième élément flexible (12), les premier et deuxième sous-espaces (81, 82) étant en liaison fluidique l'un avec l'autre par l'intermédiaire d'une zone de liaison (83).

13. Injecteur de gaz selon l'une quelconque des revendications précédentes, dans lequel l'agencement de course libre (20) et le dispositif d'amortissement (7) sont agencés dans la direction axiale (X-X) de l'injecteur de gaz sur un côté de l'actionneur (5) détourné du siège d'étanchéité (3).

14. Injecteur de gaz selon la revendication 13, dans lequel l'agencement de course libre (20) et le dispositif d'amortissement hydraulique (7) sont réalisés sous forme de module préassemblé (100).

15. Injecteur de gaz selon l'une quelconque des revendications 7 à 14, dans lequel le boulon de centrage (18) est guidé au moyen du premier élément flexible (11) et d'une rondelle d'étanchéité (19), la rondelle d'étanchéité (19) étant précontrainte au moyen d'une rondelle élastique (101).

16. Injecteur de gaz selon la revendication 15, dans lequel la rondelle élastique (101) est réalisée en forme de pot avec un bord de retenue (102), des cames (103) faisant saillie dans la direction axiale (X-X) et des ajours axiaux (104).

17. Injecteur de gaz selon l'une quelconque des revendications 7 à 14, dans lequel le boulon de centrage (18) est guidé au moyen du premier élément flexible (11) et d'une rondelle d'étanchéité (19), la rondelle d'étanchéité (19) étant précontrainte dans la direction axiale au moyen d'une rondelle enfoncée (119), qui est reliée au corps de base (17) du dispositif d'amortissement hydraulique au moyen d'une liaison par pression.

18. Injecteur de gaz selon la revendication 17, dans lequel une chambre de compensation (120) remplie de liquide est présente sur la périphérie radialement extérieure de la rondelle d'étanchéité (19).
